# EUROPEAN PATENT APPLICATION

(11) **EP 3 545 773 A1**
(43) Date of publication of application: **02.10.2019**
(21) Application number: 19165360.9
(22) Date of filing: 26.03.2019
(51) Int. Cl.: A23L 7/10, A23L 33/00, B02C 9/02, A21D 13/02

(54) **FLOUR FOR FOODS WITH LOW GLYCEMIC INDEX**

(30) Priority: 27.03.2018 IT 201800003988
(71) Applicant: Mengale, Andrea, 30035 Mirano VE (IT)
(72) Inventor: Mengale, Andrea, 30035 Mirano VE (IT)

(57) **Abstract**

This is a flour for foods with a low glycaemic index used for making baked foods.

## Description

The object of the present invention relates to a flour for foods with a low glycemic index.

### Prior Art

It is well known that people suffering from glycemic alterations must constantly watch their diet.

In fact some of the most common foods, such as bread, pasta, breadsticks, crackers, biscuits and also all baked goods (which will be referred to generically also as "baked products") can lead to imbalances in one's glycemic index.

The above-mentioned baked products have in common the raw material for their production, namely flour obtained from cereals.

In the continuation of the description by cereals is meant: wheat, both soft and hard, spelt, oats, soy, etc.

The reference part for the evaluation of the glycemic index in the aforementioned cereals is the carbohydrates, whose starch is transformed into glucose by means of diastase.

In fact, through the salivary enzymes alpha-amylase takes place, and therefore the first decomposition of the starch contained in the carbohydrates, with the reduction of the glycosidic bonds of the starch molecule.

The starch molecule is an extremely complex and compact molecule that can be attacked by amylase only starting with fractions damaged during the milling of the cereals.

It is well known that the baked products obtained from whole grain cereals have a lower glycemic index than the same baked products obtained from refined flours, 0 or double 0.

This is because the fibres, both soluble and insoluble, speed up transit through the intestines, consequently decreasing the absorption of nutrients.

Other known mechanisms that lead to the absorption of less sugar, derived from the carbohydrates in the cereals, in addition to increasing the amount of fibre in the product, are pharmaceutical products, or products with a lower percentage of carbohydrates.

However increasing fibres may not be the best choice for a lower assimilation of sugars, since it alters the natural composition of the cereal, compromising taste and flavour, and also because they can irritate the intestine, and cause serious problems in people who suffer from diverticular disease.

Also the chemicals (amylase inhibitors) added to baked products, since they are pharmaceuticals, artificially affect the nature of the products that can no longer be considered natural and can also create food intolerances.

Therefore the best performances for the control of the glycemic index obtained with the use of flours obtained from cereals, without added fibres and without the use of chemical substances, are obtained with wholemeal flours.

For the classification of flours, reference is made to their ash content (mineral substances) and to the protein content, calculated on one hundred parts of dry matter.

Soft wheat flour type 00: ashes <0.55 and minimum protein content equal to 9;
Soft wheat flour type 0: ash <0.65 and minimum protein content equal to 11;
Soft wheat flour type 1: ash <0.80 and minimum protein content equal to 12;
Soft wheat flour type 2: ash <0.95 and minimum protein content equal to 12;
Wholemeal wheat flours: 1.3 <ash<1.7 and minimum protein content equal to 12;
The passage from one type to another is obtained with the processing of the cereal, in particular during the milling phase.

In fact the processing phases of the cereal, i.e. its milling includes: shredding, sifting and milling.

During the milling phase, the cereal, already open and coarsely crushed to allow the bran to be separated (shredding) and to separate the flour from the other components of the caryopsis (sifting), passes through numerous mills.

The positioning, the radial speeds, the relative distance of the pair of cast iron cylinders, which make up the rolling mills, are identified in a diagram with the initials:
B: breakage; D stripping; R: refiners; C: millstones.

Each milling designer prepares his own diagram setting it at will to obtain the flours, to arrive in any event at a flour that complies with the aforementioned regulatory classification.

Only B is consolidated and uniquely defined in the field of flour production, while the others are used in a rather subjective way by the various designers.

Sometimes this initial is further specified as first break B1 and second break B2 in which there are respectively a first and a second step for crushing the kernels. In particular the rolling rolls of the first passage B1 or of the second passage B2 are scored rollers, whose surfaces never come into contact, and are specifically indicated with the letter B (from the French Broyage). Leaving the breakage rolling mill the compound contains all the fractions of the grain. These fractions are therefore always sent to a selection step.

Subsequently the bran is separated (to then be added again to the refined flour for wholemeal flour) and the germ or embryo removed to obtain a long-life flour.

Following the various refining steps, the desired flour is obtained.

In the various well-known recipes flour is the basic element for obtaining the various baked products.

Baked products can be sweet or savoury, leavened or unleavened, with flavourings, colourings, or other additives etc., however the basic dough is almost always made with cereal flours.

On the basis of these premises, it happens that today these baked products are carefully limited in diets for people who suffer from sugar absorption disorders with an imbalance in blood sugar, or even for people who have to follow a low sugar diet.

It is quite clear that the same flours, even not used for baked products but in other foods, have the same drawbacks for the aforementioned people.

### Objects of the invention

In the following discussion, the term low glycemic load flour is meant a flour obtained from cereals, which is used to make baked products, the consumption of which by people, and in particular by people suffering from blood sugar level disorders with a glycaemic imbalance, involves a flattened curve of the concentration of sugar in the blood (glycaemia), compared to a glycemic curve obtained by consuming a corresponding baked product made with normally refined flours, such as wholemeal flour, flour 0 or 00 flour.

A primary object of the present invention is to make available a low glycemic load flour which overcomes all the drawbacks of the state of the art.

Said low glycemic load must refer to that of similar products obtained with standard flours or with the usual and commercial portions of the product.

A further object of the present invention is to make available a flour for foods with a low glycemic load without added fibre. Another object of the present invention is to make available a flour for food with a low glycemic load without chemical substances or synthetic substances for controlling the absorption of the sugars.

An important object of the present invention is to make available a flour for food with a low glycemic load that does not involve sizeable production changes in the production process.

Another important object of the present invention is to make available a flour for food with a low glycemic load that can be used instead of flour without substantial changes to the manufacturing process of the relative food.

### Explanation of the invention

The flour for food with a low glycemic load, the object of the present invention that is the base of the dough for baked food products, is a flour made from cereals characterised by the fact that it comprises in a portion between 20% and 100% of first break B1 and/or B2 flour by weight with respect to the total flour used for the food product to be obtained, where said first break flour has a granulometry greater than 500 microns, and preferably greater than 1000 microns, and where said first break flour consists of all and only the components of the cereal being milled, without added fibre, and by the fact that it maintains an amount of fibre in its entirety.

For the definition of the invention, although the terminology of first break B in processing is a widely used and extensively applied term, it signifies a crushing process with a grain whose constituent parts are still intact.

For this reason also other definitions of first break, extended beyond B2 (for example B3) or otherwise specified such as: crushed, broken, rubbed are included in the definition of first break if the parts of the cereal are still connected and not separated. With the first break flour B1 and/or B2, the components of the flour, which is a wholemeal flour, have a granulometry greater than 500 microns, and for coarser grinding a granulometry greater than 1000 microns.

With this flour, the starch has an exposed surface that is less by at least one order of magnitude of any other flour used to obtain oven-baked products. In particular, with such an exposed starch surface the contact surfaces with the amylases are reduced, and consequently greatly limiting the activity of the enzymes responsible for the conversion of starch into glucose. This reduction in the transformation of starch into glucose, and thus slowing the level of sugar absorption, differs from what is known in the scientific literature, namely increasing the fibre to reduce absorption.

But adding elements in addition to the cereal of origin, such as increasing the fibre, has the drawback of excessively stimulating transit through the intestine with discomfort for the user. Also adding other elements such as Probiotics or also called so-called FOS: oligo-saccharide fruit, or Inulin, Beta-glucans, resistant starch, slowly digestible starch, arabinoxylans, or other types of fibre, always have the drawback of making the baked product an artificial or modified product.

According to the European Commission Concerted Action on Functional Food Science in Europe (FUFOSE), food can be defined as "functional" if "its ability to beneficially modify one or more physiological functions of the human body, independently of the effects, has been adequately demonstrated by an adequate diet, inducing significant benefits for physical and mental health and/or a reduction in the risk of disease". Furthermore, it must "present itself in the form of real food and must be able to exercise its effects in quantities that can be consumed in the diet".

Functional foods are divided into "conventional" and "modified".

The first category includes whole grains, dried fruit, soy, tomatoes, foods in which the physiologically active components (for example fibre, β-carotene, lycopene, etc.,) are already naturally present in the food.

On the other hand, products fall within the second category for which the technology:
a) enriches or adds to the food of one or more components with beneficial effects (e.g. fibre, prebiotics, vitamins, etc.);
b) removes from the food one or more components with negative effects (e.g. allergenic proteins, alcohol, etc.);
c) replaces one component with another one that has beneficial effects (e.g. replacement of fats with high molecular weight inulin);
d) improves the bioavailability of molecules with beneficial health effects (e.g. the pre-fermentation of whole wheat flour increases the bioavailability of ferulic acid).

Modified or artificial functional foods are therefore foods that are not natural foods in their composition, and have an altered taste.

The flour of the invention is a conventional functional food.

There is a great deal of literature in this regard: Riccardi G, Rivellese AA, Giacco R. Role of glycemic index and glycemic load in the healthy state, in prediabetes, and in diabetes. Am J Clin Nutr 2008; 87: S269-S274.

Quaglia Giovanni. Scienza e tecnologia della panificazione Chirotti Editore 1984;205
Quaglia Giovanni. Scienza e tecnologia della panificazione Chirotti Editore 1984:51
Asp NG, Van Amelsvoort JMM, Hautvast JGAJ. Nutritional implications of resistant starch. Nutr Res Rev 1996; 9: 1-31.
- Priebe MG, van Binsbergen JJ, de Vos R, Vonk RJ. Whole Grain Foods for the Prevention of Type 2 Diabetes Mellitus. John Wiley & Sons, Ltd., Hoboken, 2008.
- Carter P, GrayLJ, Troughton J, Khunti K, Davies MJ. Fruit and Vegetable Intake and Incidence of Type 2 Diabetes Mellitus: Systematic Review and Meta-Analysis. BMJ, 2010; 341: c4229-c4236.
- Katan MB, Grundy SM, Willett WC. Beyond low-fat diets. NEJM, 1997; 337, 563-566.
- Sacks FM, & Katan M. Randomized clinical trials on the effects of dietary fat and carbohydrate on plasma lipoproteins and cardiovascular disease. Am J Med, 2002; 113: 13S-24S.
- King DE, Mainous AG 3rd, Lambourne CA. Trends in dietary fiber intake in the United States, 1999-2008. J Acad Nutr Diet 2012; 112: 642-648.
- Lachat C, Nago E, Verstraeten R, Roberfroid D, Van Camp J, Kolsteren P. Eating out of home and its association with dietary intake: a systematic review of the evidence. Obes Rev 2012; 13: 329-346.

Roberfroid MB. Global view on functional foods: European perspectives. Br J Nutr. 2002; 88: S133-S138.

From the aforementioned, and other literature, it can be seen, and it is well known, that the slowing down of glucose absorption with a cereal meal is due to:
- Adding fibre to the flour;
- Presence of lipids;
- Refining pulverised starch.

The object of the invention therefore with respect to the documents of the prior art:
- avoids the addition of fibre to the flour, or other mineral elements unrelated to the starting cereal,
- in a generic formulation of the invention, also without the addition of lipids, (see later in the text the specification regarding the lipids present in Wheat Germ)
- avoids the pulverisation of the flour and in particular of the starch. The object of the invention, therefore, with the aforementioned limitations, achieves unexpected objectives, as shown in the attached tables of the studies carried out to verify the decrease in post-prandial glycemic values, with a flour, in the concentration between 20 and 100% of first break flour, crushed with a particle size greater than 500 microns, and preferably greater than 1000 microns.

Advantageously, completing the minimum percentage use of first break B1 and/or B2 flour, the low glycemic load flour for food includes "wholemeal" type flour to have further lowering of the blood sugar levels, with an absorption curve which is flattened. For example, in breadsticks with 14% by weight of wholemeal flour, the absorption curve is lowered by 20%.

Advantageously, in combination with the first break flour B1 and/or B2, the low glycemic load flour for food includes flours with an ash content higher than 0.8 to highlight the effects of lowering the glycemic load values, with an effect that is more than proportional to the increase in quantity of fibre.

Advantageously, the low glycemic load flour for food includes added oils and/or fats directly associated with the first break B1 and/or B2 flour, achieving a synergistic and more than proportional effect with respect to the single compounds that further reduce the glycemic load of the invention.

These advantages and other objects are all attained by the low glycemic load flour of the invention, in accordance with the attached claims.

### Explanation of the invention

Starting from the definition of first break of the cereal grain, this processing phase shows a product that is currently only an intermediate, necessary for the greater processing and processing necessary to arrive at a dough considered workable. In fact it is known that in the first break phase, the cereal coating is crushed and then this coating, as the bran, is separated from the grain of the cereal, which, now stripped, proceeds towards the next process of the refinement.

The first break flour, complete with all its constituent parts, is neither marketable nor commercialised, since it has no specific and possible use. In fact, very often the production process provides immediately downstream, and in continuity in the milling processes, the realisation of the first break for the subsequent and necessarily additional grinding processes.

The explanation of the effects and the consequent results for the use of a low glycemic index flour for food, which is the object of the invention, can be explained by the fact that when a starch is ground, and therefore the more thinner the starch particles are, this means there is a greater refining, the greater hydrolysation of the starch molecules favours the attack of the amylases, which results in the increase of the glycemic index.

Whereas reducing the surface of the starch, the quantity of hydrolysed surface is reduced. This decrease in surface area exposed to the enzymatic attack of amylase, reduces the volume and therefore the surface of the starch that the diastases go to break down, obtaining in the flour a reduction of the sugars already present, and in the metabolic assimilation phase a reduction of the volumes of attackable starch.

The flour of the invention, which uses the first break, i.e. the fibrous and endosperm part still whole, is characterised by a greater lightness in relation to the volume, by the fact that a quantity of fibre is maintained in its entirety (avoiding having to add fibre for a minimal result on the incidence of the glycemic index), and from the marked grain size of the grain of wheat.

It is quite clear that the use of several flours of different cereals is also admissible for obtaining the flours of the invention, maintaining the percentages of first/second break according to the values set out above.

### Brief description of the drawings

The technical characteristics of the invention, according to the aforesaid objects, can clearly be seen in the content of the claims below, and its advantages will become more readily apparent in the detailed description that follows, made with reference to the accompanying drawings, which illustrate a preferred embodiment, which is purely exemplary and not limiting, in which:
Table 1 shows a test report showing the composition of the flour that is the object of the invention.

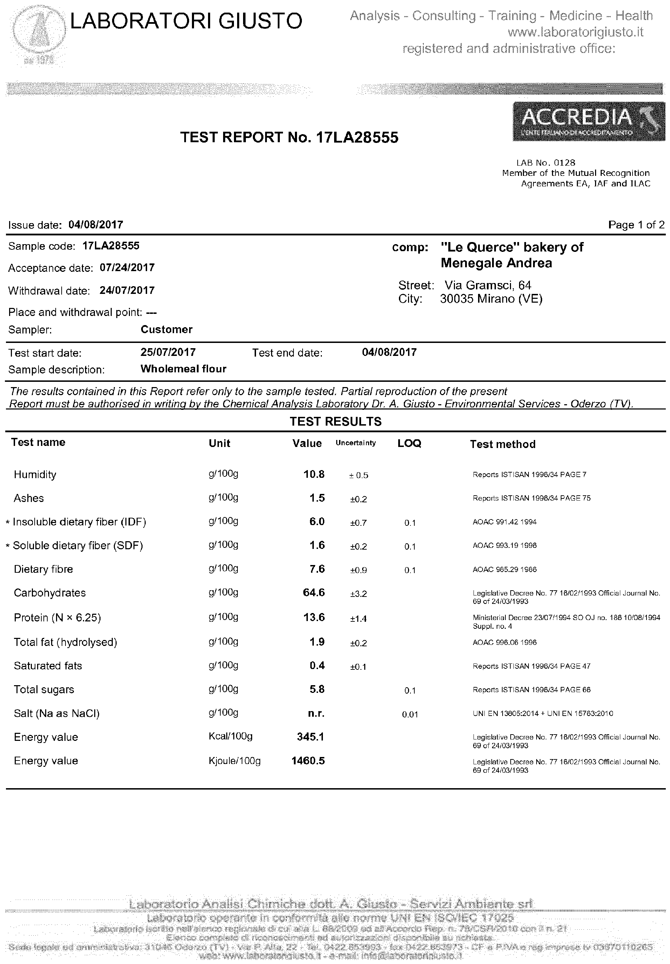

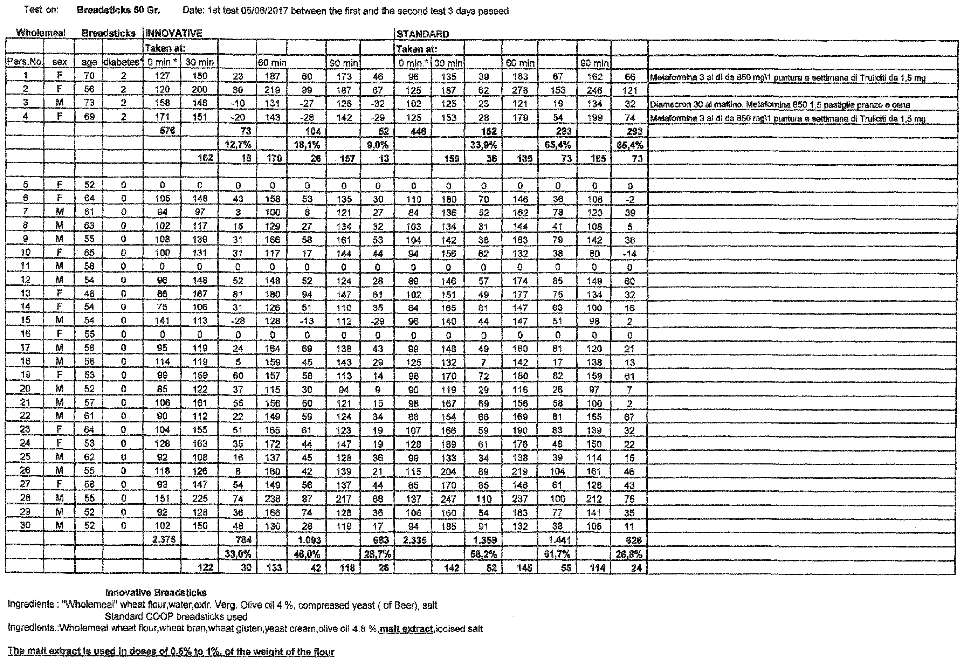

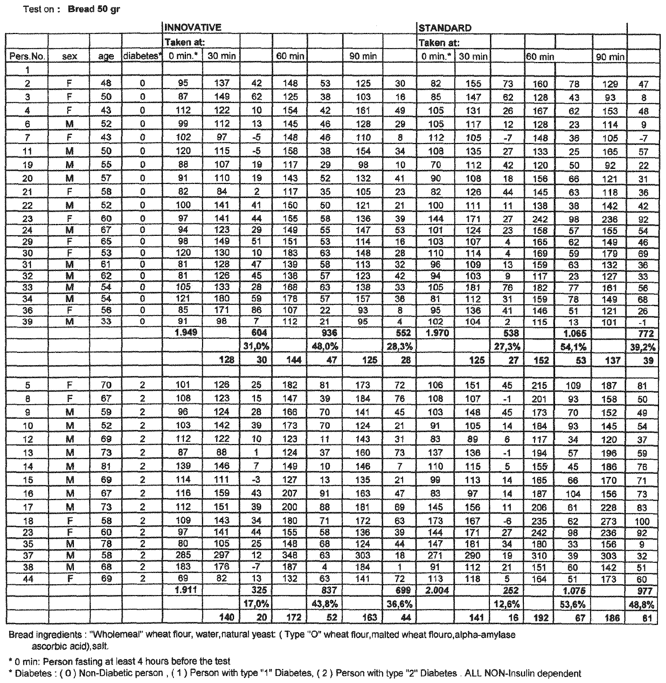

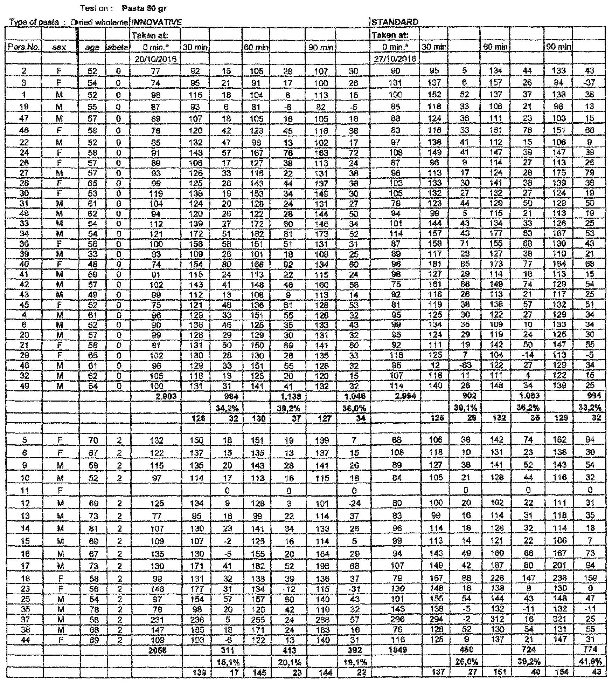

The tables of figures 2, 3, 4, 5 show, respectively for the products: breadsticks, pasta, biscuits, the comparative test carried out with the flour of the invention and a normal flour for a group of diabetic and non-diabetic persons, the blood glucose values before and 30, 60 and 90 minutes respectively after taking the product.

Under each table are the boundary conditions and the test execution methods.

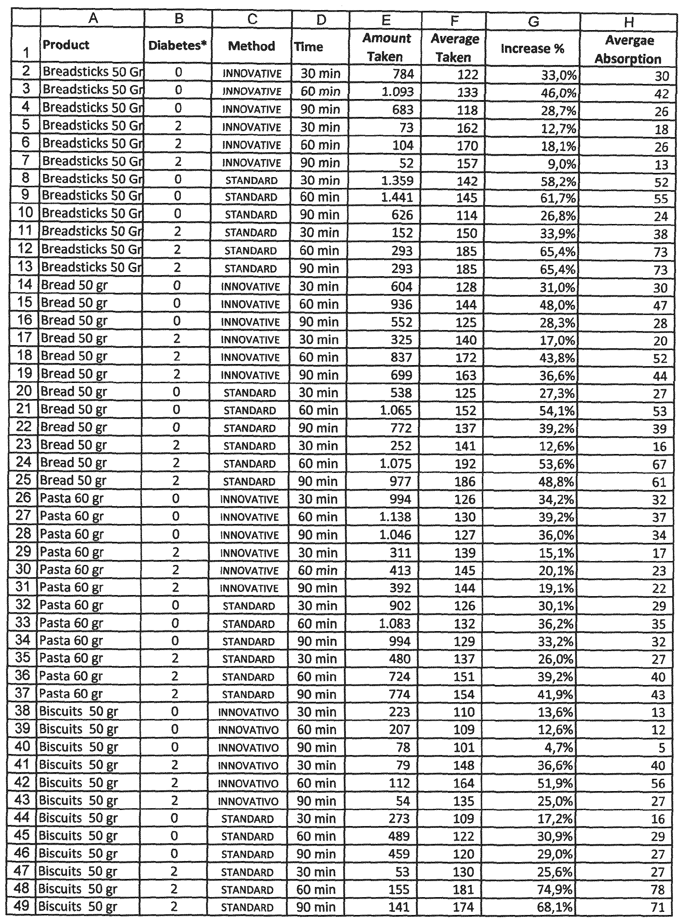

In the table of figure 6 a comparison of the assimilated data is shown for each of the products of the tables 2-6 highlighting the absorption.

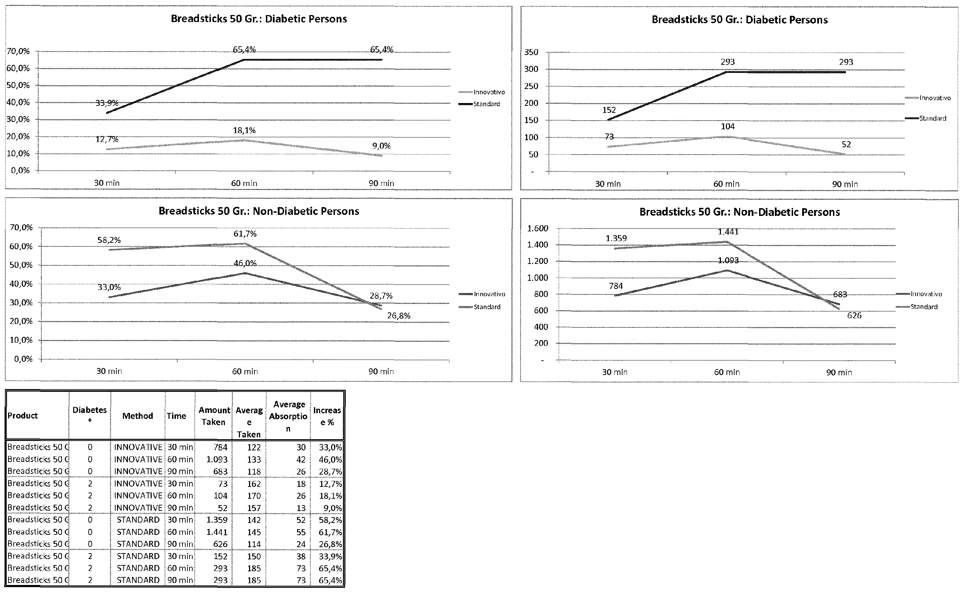

In the graphs of figure 7, 8, 9 10 the trend in time of the absorption curves for the innovative product (object of the invention) and for the standard product are graphically compared.

### Description of significant drawings and tests

With reference to the tables, it is clear that the data confirms the aims and the results highlight, in a comparative manner compared to a normal commercial product, the quality of the benefits highlighted.

As can be seen from the test report shown in Table 1, the chemical composition of the flour of the object of the invention does not differ qualitatively from a whole wheat flour since the ash content is 1.5.

In this flour, which was used to carry out the tests shown in the following tables, different fibres were not added, no synthetic or chemical product was used to limit or block the intake of sugars.

It should be noted that this flour is natural without added fibre, such as for example probiotic soluble fibres, Inulin or beta glucans which behave like insoluble fibres. In fact, for example, inulin is practically indigestible and is therefore considered an unavailable carbohydrate.

For a validation of the results it was decided to subject a heterogeneous sample of people, some diabetics and other non-diabetics, to a normal product and a product of the invention in order to compare the results, evidencing the difference in sugar absorption.

The numeric data for each person is shown in the tables: Breadsticks Data in fig. 2, Bread Data in fig. 3, Pasta Data in fig. 4, Biscuit Data in fig. 5.

As regards the graph of fig. 2, we need to specify that in the breadsticks made with the flour of the invention no fibres were added. If fibres had been added, for example with a quantity of 14% by weight to the flour, in the innovative breadsticks it would have been possible to obtain a lowering of the curve of absorptions with a percentage of 20%.

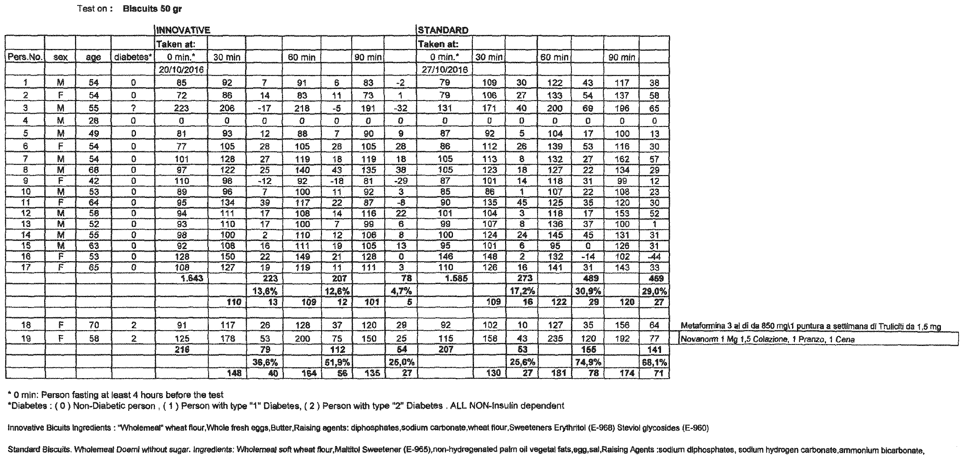

As regards the graph of fig. 5 we need to specify that lipids with a weight of 30% on the flour were added. From an examination of the graphs at the 90th minute we can see that the glucose absorption curve for the innovative biscuits is almost zero, while for traditional biscuits (with the same percentage of lipids added at 30%) the curve remains unchanged between 60 and 90 minutes. The results would have been even more evident and striking with lipids added at 50% by weight to the flour (percentage of a "Frolla Milano" - Milano Shortbread), with a reduction in absorption also by 15-20%, even in the first 30\60 minutes. In each of the aforementioned tables there is a subject with a reference number, sex, age, and fasting diabetes.

For the same person at two different dates, with a time interval of at least 3 days, the glycemic indexes were collected at 30, 60 and 90 after taking the innovative product, the object of the invention, and, in a second date, of a corresponding but standard product.

In the DB Sint Table of fig. 6 the data was aggregated with respect to the persons, maintaining the time and date distinction.

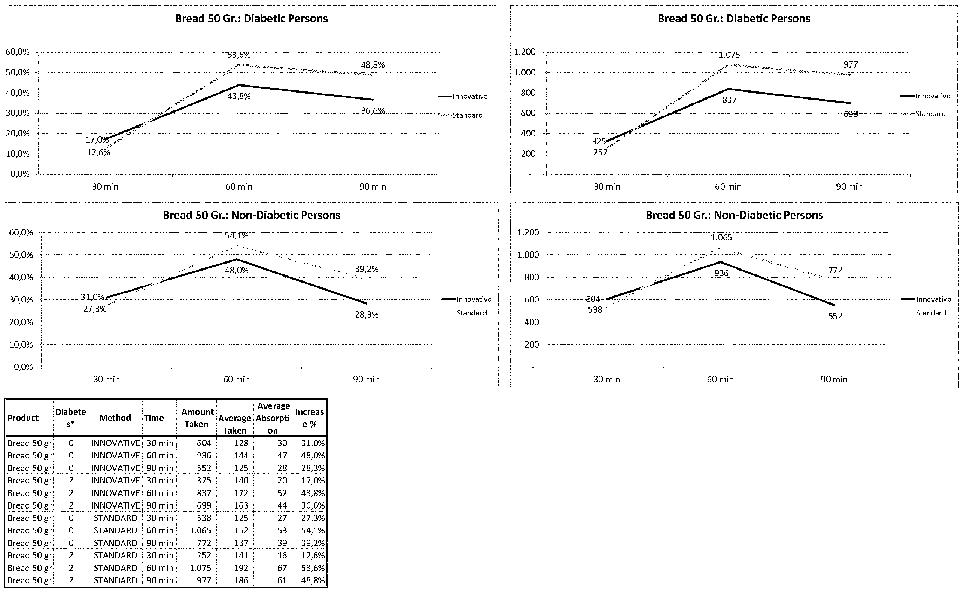

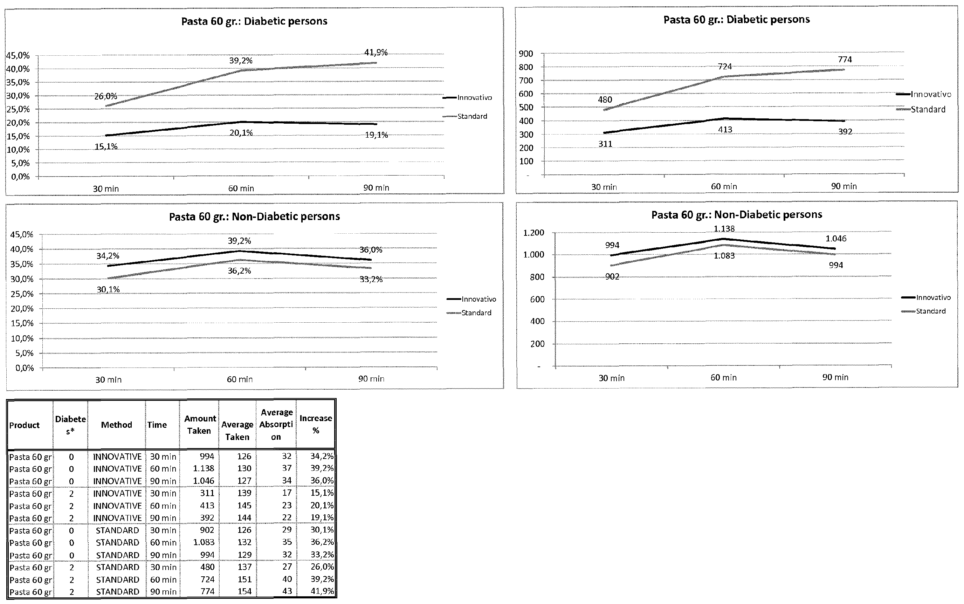

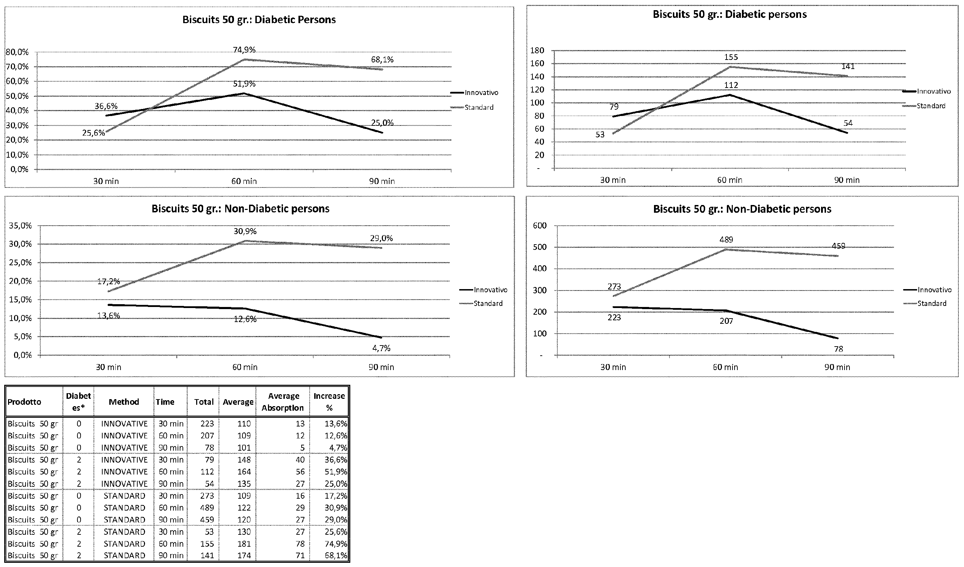

The aggregated data is shown graphically in the Breadsticks graphs of fig. 7, Bread Chart of fig. 8, Pasta Chart of fig. 9 and Biscuit Chart of fig. 10 with a broken line for the innovative product and a second broken line for the standard product.

From this graphic comparison the absolute, unexpected, incredible innovation of the invention is evident, without added fibres or other elements of synthesis.

The results are clear for people who do not have any eating disorders, who are able to manage their glycemic intake correctly, but are striking for people with diabetes.

Pasta: In pasta for non-diabetic people, we find a parallelism of values, with a modest but significant difference in absorption rates.

Another value is the graph for Diabetic people. The difference in terms of percentage is remarkable. For the product that is the object of the invention we have a flattening of values, with very little increase in absorption percentages. The trend for people with diabetes, even if it is only slight, is one that is decreasing. While the absorption with regard to the Standard pasta continues unexpectedly to increase.

Bread: For bread the two graphs are similar. We can also in this case speak of parallelism of the lines in the times. This could be imagined because we are working for the bread (object of the invention) with percentages of "Light" mixtures. In bread we have performance problems related to leavening. However, there is a significant difference in the absorption rate. The product, the object of the invention, also in this case, however, remains the winner in the test. Breadsticks: The breadstick graphic is really unexpected.

In non-diabetic people in the first thirty minutes we have absorptions in the breadsticks, the object of the invention, which are incredibly half of the Standard breadsticks. At 90 min. we continue to have absorptions that demonstrate the indisputable incisiveness of the product. The trend is decreasing just as with the Standard breadsticks.

For Diabetics, then, the absorption graphs over time are unquestionably impressive. For the breadsticks, the object of the invention, we have a total flattening of the absorptions, with an incomparable percentage with respect to the Standard breadsticks. If, then, read the data of the tables, in the times we will even find some blood sugar levels decreasing, after having eaten the product the object of the invention. Downward trend in the product object of the invention, while it remains actually constant even after 90 minutes for the standard product. Biscuits: For this type of product in non-diabetics we have a maximum value in the first thirty minutes. Then a constant decrease. Contrary to what we have seen so far. We expected an increase in absorptions even at 90 minutes, but it did not happen. Truly a graph with unanticipated results.

For diabetics, starting at 30 min., it is somewhat similar for the two products. At 90 min., however we start to see the results. However, we continue to have an unquestionably better performance in terms of absorption in the biscuits, the object of the invention. After 90 minutes, the tendency to decrease of the biscuits, object of the invention, is very sudden, substantially halving the values taken over time. Contrary to what happens with Standard biscuits where the tendency is a minimal decrease but not comparable if compared to the decrease of the biscuits, the object of the invention.

As regards the presence of lipids in the cereal, the lipids present are in an amount of about 1,5-2% by weight of the total weight of the cereal and are contained in the wheat germ.

Again, with the normally refined flour the germ must be removed during the processing because it would soon, if left in the flour, turn the flour rancid in just a few weeks. After extraction, and only after a heat treatment that "sterilises" it, causing the "live" component to die, is the wheat germ added again to the refined flour in quantities of between 5-15%. In the flour of the invention, on the other hand, the wheat germ is left as a component of the first break flour, with its own lipid component. The flour of the invention, therefore, has its own quantity of natural lipids and no other lipids are added.

## Claims

1. Low glycemic load flour obtained from cereals and used for the making of baked food products **characterised by** the fact that it comprises in a portion of between 20% and 100% first break B1 and/or B2 flour by weight with respect to the total of the flour used for the baked product to be obtained, where said first break flour has a granulometry greater than 500 microns, and preferably greater than 1000 microns, and where said first break flour consists of all and only the components of the cereal being milled, without added fibre, and by the fact that it maintains an amount of fibre in its entirety.

2. Low glycemic load flour according to claim 1, **characterised by** the fact that in completing the minimum percentage of use of first break B1 and/or B2 flour, the flour for food with low glycemic load includes an "wholemeal" type flour to have a further lowering of the absorption curves, and preferably with 14% of wholemeal flour you obtain a lowering of 20% of the absorption curves.

3. Low glycemic load flour according to claim 1 **characterised by** the fact that in combination with the first break B1/B2 flour, the low glycemic load flour for food includes flours with an ash content higher than 0.8, in quantities between 10 and 20%, to accentuate the effects of lowering the glycemic load values, with an effect that is more than proportional to the increase in the quantity of fibres with an estimated decrease between 15 and 25% of the absorption curve.

4. Low glycemic load flour according to claim 1 **characterised by** the fact that in combination with the first break B1/B2 flour, the low glycemic load flour for food includes oils and/or fats added in a percentage between 4-23% by weight of the total flour for the production of bread, or breadsticks or biscuits, to accentuate the lowering effects of the glycemic load values, directly associated with said first break B1/B2 flour, with a reduction in absorption of 15-20% compared to bread, or breadsticks or biscuits, produced without the addition of fat.

5. Low glycemic load flour according to claim 1 **characterised by** the fact that in combination with the first break B1/B2 flour, the low glycemic load flour for foods includes oils and/or fats added in a percentage of 25-50% by weight of the total of the flour for the production of biscuits to bring out the effects of lowering the glycemic load values, directly associated with said first break B1/B2 flour, with a reduction in absorption of 15-20% compared to biscuits produced without the addition of fat.
